Europäisches Patentamt

European Patent Office

Office européen des brevets

(19)

(11) Veröffentlichungsnummer: **0 304 571**
**A2**

## (12) EUROPÄISCHE PATENTANMELDUNG

(21) Anmeldenummer: 88109585.5

(22) Anmeldetag: 16.06.88

(51) Int. Cl.⁴: **B29C 65/18 , B29C 65/26 ,**
**//B29L23/22**

(30) Priorität: **28.08.87 CH 3323/87**

(43) Veröffentlichungstag der Anmeldung:
**01.03.89 Patentblatt 89/09**

(84) Benannte Vertragsstaaten:
**AT BE CH DE ES FR GB GR IT LI LU NL SE**

(71) Anmelder: **GEORG FISCHER**
**AKTIENGESELLSCHAFT**
**Mühlentalstrasse 105**
**CH-8201 Schaffhausen(CH)**

(72) Erfinder: **Kunz, Peter**
**Breitenaustrasse 156**
**CH-8200 Schaffhausen(CH)**

(54) **Verfahren und Einrichtung zur Herstellung einer Schweissverbindung von rohrförmigen Teilen aus thermoplastischem Material.**

(57) Die Einrichtung besteht aus einer Haltevorrichtung (2) für die zu verschweissenden rohrförmigen thermoplastischen Teile (1a, 1b) und aus einer in den rohrförmigen Teilen (1a, 1b) angeordneten Heizvorrichtung (4). Die Heizvorrichtung (4) weist einen aufweitbaren Hohlkörper (5) auf, welcher in seinem Innenraum (6) mit einem elektrischen Heizelement (7) und einer, bei Erwärmung sich ausdehnenden Flüssigkeit (8) versehen ist.

Beim Erhitzen mittels elektrischer Energie legt sich der Hohlkörper (4) an die zu verschweissenden Enden der rohrförmigen Teile (1a, 1b), wobei die erforderliche Schweisstemperatur auf diese Teile übertragen wird. Durch das Anliegen des Hohlkörpers (5) an der Innenkontur der rohrförmigen Teile (1a, 1b) wird die Bildung einer Schweisswulst vermieden.

Nach erfolgter Verschweissung wird der abgekühlte und eingeschrumpfte Hohlkörper (4) mittels des Zugstranges (11) herausgezogen.

Fig 1

EP 0 304 571 A2

## Verfahren und Einrichtung zur Herstellung einer Schweissverbindung von rohrförmigen Teilen aus thermoplastischem Material

Die Erfindung betrifft ein Verfahren zur Herstellung einer Schweissverbindung von rohrförmigen Teilen aus thermoplastischem Material gemäss dem Oberbegriff vom Anspruch 1 sowie eine zur Durchführung des Verfahrens erforderliche Einrichtung gemäss dem Oberbegriff von Anspruch 2.

Es ist bekannt (z.B. DE-B-2212055), die stirnseitigen Enden von rohrförmigen thermoplastischen Teilen mittels eines elektrisch aufheizbaren Heiz-Spiegels zu erhitzen und die in der Einrichtung eingespannten Teile nach dem Wegschwenken des Heizspiegels mit den Stirnseiten aneinanderzudrükken, so dass eine Stumpfschweissung entsteht. Nachteilig ist hierbei, dass insbesondere auch am Innenumfang ein Schweisswulst entsteht, welcher den Durchflussquerschnitt verringert, den Strömungswiderstand erhöht und ausserdem eine grosse Gefahr für unerwünschte Ablagerungen wie Schmutz oder Bakterien usw. darstellt. Die Einrichtung ist ausserdem sehr aufwendig und zum Einsatz an den Baustellen uie z.B. bereits in Gräben verlegten Rohrleitungen schlecht geeignet.

Aufgabe der vorliegenden Erfindung ist die Schaffung eines Verfahrens der eingangs genannten Art, bei welchem ein innerer Wulst an der Schweissverbindung vermieden wird. Die dafür erforderliche Einrichtung soll einfach im Aufbau und auch an der Baustelle bei bereits verlegten Rohrleitungen verwendbar sein.

Erfindungsgemäss wird diese Aufgabe durch die kennzeichnenden Verfahrensmerkmale von Anspruch 1 und die kennzeichnenden Einrichtungsmerkmale von Anspruch 2 gelöst.

Die Erfindung ist in den beiliegenden Zeichnungen beispielsweise schematisch dargestellt und nachfolgend beschrieben. Es zeigen

Fig. 1 einen Querschnitt einer Einrichtung zum Verschweissen zweier rohrförmiger Teile und

Fig. 2A bis 2D eine Ausführungsvariante der Heizvorrichtung von Fig. 1 während dem Herausziehen aus einer Rohrleitung in vier verschiedenen Ausziehphasen durch eine Rohrecke.

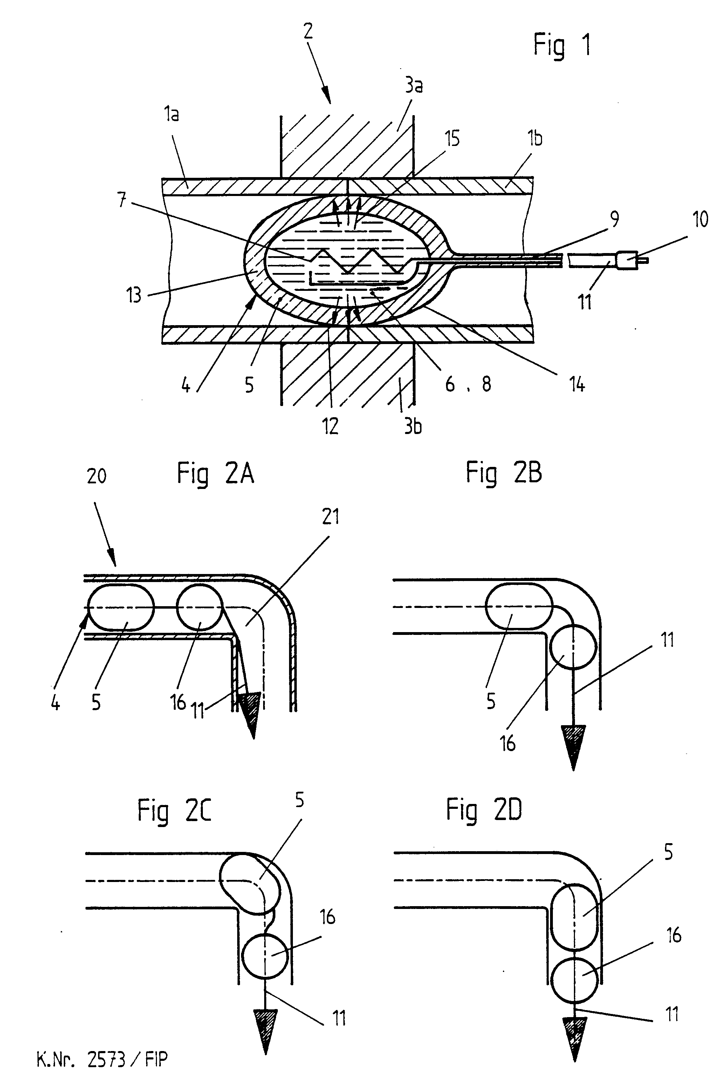

Fig. 1 zeigt die Enden zweier rohrförmiger Teile 1a,1b aus thermoplastischem Material während dem Verschweissen mittels einer erfindungsgemässen Einrichtung. Die Einrichtung weist eine Haltevorrichtung 2 mit den beiden rohrförmigen Teilen 1a,1b in positionierter Lage haltenden Klemmbacken 3a, 3b auf. Die Klemmbacken 3a, 3b oder zumindest die mit den rohrförmigen Teilen in Berührung stehenden Flächen bestehen aus einem thermisch schlecht leitendem Material wie z.B. aus rostfreiem Stahl oder Keramik.

Eine Heizvorrichtung 4 weist einen in die rohrförmigen Teile 1a.1b einschiebbaren Hohlkörper 5 auf, welcher vorzugsweise als eine aufweitbare Blase aus einem hitzebeständigen Elastomer oder Silicon ausgebildet ist.

Im Innenraum 6 der Blase 5 ist ein elektrisches Heizelement 7 und eine thermisch expandierende Flüssigkeit 8 wie z.B. synthetisches Oel angeordnet. Das Heizelement 7 ist mittels längeren aus der Rohrleitung herausragenden Kabeln 9 mit einer Stromquelle 10 verbunden, wobei die Kabel 9 in einem als Zugstrang 11 ausgebildeten und mit der Blase 5 verbundenen Schlauch angeordnet sind.

Der Hohlkörper 5 ist länglich bzw. oval ausgebildet und weist eine zylindrische Partie 12 und abgerundete Enden 13, 14 auf, wobei an einem Ende 14 der Zugstrang 11 befestigt ist.

Zum Verschweissen wird der Hohlkörper 5 mit der zylindrischen Partie 12 in den Bereich der zusammenstossenden Enden der in den Klemmbacken 3a, 3b gehaltenen rohrförmigen Teile 1a, 1b gebracht.

Durch Einschalten der Stromquelle 10 wird die Flüssigkeit 8 erhitzt, der elastische Hohlkörper 5 dehnt sich aus und legt sich mit seiner zylindrischen Partie 12 an den Innenumfang der beiden rohrförmigen Teile 1a, 1b fest an, so dass die weiterhin erzeugte Hitze gemäss den Pfeilen 15 auf die Enden der zu verschweissenden Teile 1a, 1b übertragen wird, bis das thermoplastische Material in den Schmelzezustand übergeht und miteinander verschweisst. Nach dem Abschalten der Stromzufuhr zum Heizelement 7 kühlt das thermoplastische Material, eventuell unterstützt durch eine Kühlung von aussen, ab, so dass eine feste Schweissverbindung entsteht. Die Anlage des Hohlkörpers 5 am Innenumfang bleibt mindestens bis zur Erstarrung aufrecht erhalten, so dass kein, die lichte Weite einengender Schweisswulst entstehen kann. Beim weiteren Abkühlen der Flüssigkeit 8 im Innenraum 6 des Hohlkörpers 5 schrumpft dieser in seine Ursprungsform zurück, so dass er mittels des Zugstranges 11 herausgezogen werden kann.

Sind in einem Rohrleitungssystem 20 gemäss Fig. 2 scharfe Ecken 21 angeordnet, so kann die Heizvorrichtung 4 mit vorgegebener Distanz zum Hohlkörper 5 am Zugstrang 11 einen kugelförmigen Führungskörper 16 aufweisen. Wie in den Fig. 2A bis 2D dargestellt, wird dadurch das Herausziehen der gesamten Heizvorrichtung aus einer mit scharfen Ecken 21 versehenen Rohrleitung 20 ermöglicht, ohne dass der Hohlkörper auf einen gegenüber dem Rohrinnendurchmesser wesentlich kleineren Durchmesser eingeschrumpft werden muss.

**Ansprüche**

1. Verfahren zur Herstellung einer Schweissverbindung zweier rohrförmiger Teile aus thermoplastischem Material, dadurch gekennzeichnet, dass die stirnseitigen Enden der rohrförmigen Teile aneinanderliegenden in positionierter Lage am Aussenumfang gehalten werden, dass die für die Verschweissung erforderliche Wärmeenergie vom Innenumfang der rohrförmigen Teile durch direkten Kontakt mit einem gegen die Innenwand durch Aufweitung gedrückten erhitzten Körpers übertragen wird, und dass nach erfolgter Verschweissung der durch Abkühlung geschrumpfte Körper aus dem Rohr herausgezogen wird.

2. Einrichtung zur Durchführung des Verfahrens nach Anspruch 1, mit einer Halte- und einer Heizvorrichtung, dadurch gekennzeichnet, dass die Heizvorrichtung (4) einen in die rohrförmigen Teile (1a,1b) einschiebbaren Hohlkörper (5) aufweist, welcher im Innenraum (6) ein elektrisches Heizelement (7) und ein thermisch expandierendes Medium (8) aufweist, wobei das Heizelement (7) mittels elektrischen Kabeln (9) mit einer Stromquelle (10) verbunden ist.

3. Einrichtung nach Anspruch 2, dadurch gekennzeichnet, der Hohlkörper (5) als Blase ausgebildet aus einem hitzebeständigen Elastomer oder Silicon hergestellt ist.

4. Einrichtung nach einem der Ansprüche 2 oder 3, dadurch gekennzeichnet, dass das thermisch expandierende Medium eine Flüssigkeit (8) ist.

5. Einrichtung nach einem der Ansprüche 2 bis 4, dadurch gekennzeichnet, dass der Hohlkörper (5) eine zylindrische Partie (12) und abgerundete Enden (13, 14) aufweist, und dass die Kabel (9) in einem, an einem Ende (14) des Hohlkörpers (5) befestigten Zugstrang (11) angeordnet sind.

6. Einrichtung nach Anspruch 5, dadurch gekennzeichnet, dass am Zugstrang (11) mit bestimmter Distanz zum Hohlkörper (5) ein kugelförmiger Führungskörper (16) angeordnet ist.

7. Einrichtung nach einem der Ansprüche 2 bis 6, dadurch gekennzeichnet, dass die Halteeinrichtung (2) thermisch schlecht leitende Klemmbacken (3a, 3b) aufweist.

Fig 1

Fig 2A

Fig 2B

Fig 2C

Fig 2D